# EUROPÄISCHE PATENTSCHRIFT

(11) **EP 1 634 491 B1**
(45) Veröffentlichungstag und Bekanntmachung des Hinweises auf die Patenterteilung: **16.04.2008**
(21) Anmeldenummer: 05106304.8
(22) Anmeldetag: 11.07.2005
(51) Int. Cl.: A01F 15/08

(54) **Rundballenpresse mit einer Ballenbildungskammer variabler Größe und einer Vorrichtung zur Messung des Durchmessers und der Form eines Rundballens**
Rotobaler with a variable volume pressing chamber and a device to measure diameter and shape of a round bale
Presse à balles rondes avec une chambre de compression à volume variable et un dispositif pour mesurer le diamètre et la forme d'une balle ronde

(30) Priorität: 03.09.2004 DE 102004042740
(43) Veröffentlichungstag der Anmeldung: 15.03.2006
(73) Patentinhaber: DEERE & COMPANY, Moline, Illinois 61265-8098 (US)
(72) Erfinder: Biziorek, Stéphane, 70600, Champlitte (FR)
(74) Vertreter: Holst, Sönke

(56) Entgegenhaltungen:
- EP-A- 0 287 156
- EP-A- 1 327 385
- EP-A- 1 397 954
- DE-A1- 4 442 479
- US-A- 4 228 638
- US-A- 4 686 820
- US-A- 5 182 987
- US-A1- 2002 059 787

## Beschreibung

Die Erfindung betrifft eine Rundballenpresse mit einer Ballenbildungskammer variabler Größe und einer Vorrichtung zur Messung des Durchmessers und der Form eines Rundballens, mit wenigstens einem Sensor, der eingerichtet ist, eine Information hinsichtlich des Durchmessers eines in der Ballenbildungskammer gebildeten Ballens zu erzeugen.

Mechanische Vorrichtungen zur Erfassung der Größe bzw. Symmetrie eines in einer Rundballenpresse erzeugten Ballens wurden in der US 4 433 533 A und in der FR 2 579 063 A vorgeschlagen. Sie umfassen zwei Walzen, die an den die Ballenbildungskammer nach außen begrenzenden Riemen abrollen. Die Position bzw. Symmetrie der Positionen der Walzen wird dem Bediener des die Ballenpresse ziehenden Traktors mechanisch angezeigt (FR 2 579 063 A) oder dient zum selbsttätigen Lenken der Ballenpresse (US 4 433 533 A). Die EP 0 634 094 A schlägt vor, durch an den Seitenflanken des Ballens anliegende Federn die Kompaktheit des Ballens zu erfassen und mittels Potentiometern in elektrische Signale umzuwandeln.

Andere mechanische Vorrichtungen erfassen die Ballengröße nur an einer einzigen Messstelle. Gemäß der EP 0 287 156 A wird die Position einer Spannrolle des Riemens mechanisch auf einen magnetisch arbeitenden Mikroschalter übertragen, während die Position der Spannrolle gemäß der EP 0 296 709 A durch ein Potentiometer erfasst wird. Die DE 44 42 479 A schlägt vor, die Position eines Kettenrads, das sich bei der Bildung des Ballens bewegt, durch einen optischen Sensor zu erfassen.

Bei diesen Ballenpressen ist aufgrund der staubigen Umgebung mit Fehlfunktionen in der Mechanik zu rechnen. Außerdem sind nur eine einzige oder zwei Messstellen entlang der Breite des Ballens vorhanden, so dass keine zuverlässige Funktion über die Verteilung des Ballendurchmessers über seine Breite vorliegt.

In der US 4 850 271 A wird eine Rundballenpresse mit einer Mess- und Anzeigeeinrichtung für den Ballendurchmesser beschrieben. Die Messeinrichtung umfasst drei über die Breite der Ballenbildungskammer verteilte Sensoren, die jeweils mittels einer federvorgespannten Mechanik die Spannung von Riemen der Ballenbildungskammer erfassen. Die Mechanik bewegt Potentiometer, die wiederum über einen Signalprozessor mit der Anzeigeeinrichtung verbunden sind. Ein weiteres Potentiometer erfasst die Position eines Spannarms der Riemen. Anhand der drei auf der Anzeigeeinrichtung separat angezeigten Messwerte für die Spannung der Riemen kann der Bediener die Form und eventuelle Ungleichmäßigkeiten im Durchmesser des Ballens erkennen und, falls noch möglich, entsprechende Gegenlenkmaßnahmen durchführen. Die Erfassung des Durchmessers anhand der Position des Spannarms erlaubt nur, den jeweils größten Durchmesser des Ballens zu bestimmen, während die anhand der Spannung der Riemen erfasste Information über die Form des Ballens relativ ungenau ist, da die Spannung der Riemen nicht nur von den lokalen Abmessungen des Ballens abhängt, sondern auch durch Lagerreibung und über die Breite des Ballens variierende mechanische Eigenschaften, insbesondere die Elastizität des Ernteguts, beeinflusst wird. Die mechanischen Elemente der Sensoren sind einer relativ staubigen Umgebung ausgesetzt, so dass sie nach relativ kurzer Zeit verunreinigen und die Sensoren ihre Funktion verlieren können.

Die DE 38 11 649 C schlägt vor, stromauf der Presskammer einer Rundballenpresse eine Anzahl von Sensoren über die Breite des Erntegutstroms zu verteilen, um die Erntegutverteilung zu ermitteln und diese Information zur selbsttätigen seitlichen Verschiebung der Ballenpresse und/oder des Erntegutstroms zu nutzen. Die Sensoren können kontaktlos arbeiten, beispielsweise kapazitiv oder auf Licht- oder Ultraschallbasis. Hier wird jeweils das Erntegut vor dem Pressen erfasst. Die eigentliche Ballengröße wird nicht ermittelt.

Das der Erfindung zu Grunde liegende Problem wird darin gesehen, eine gegenüber dem Stand der Technik verbesserte Vorrichtung zur Messung des Durchmessers und der Form eines Rundballens bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Position der äußeren Oberfläche des Ballens und/oder eines die Ballenbildungskammer nach außen begrenzenden, endlosen Förderelements durch einen geeigneten Sensor berührungslos zu erfassen. Der Sensor kann den eigentlichen Ballen an den Spalten zwischen den einzelnen Förderelementen der Ballenbildungskammer erfassen oder akustische oder elektromagnetische Wellen verwenden, die das Förderelement durchdringen, jedoch von der Oberfläche des Ballen reflektiert werden. Alternativ oder zusätzlich wirkt der berührungslose Sensor mit wenigstens einem Förderelement der Ballenbildungskammer zusammen.

Dadurch vermeidet man mechanische Elemente, die in der staubigen Umgebung einer Ballenpresse unzuverlässig arbeiten. Durch die Erfassung des eigentlichen Ballens und/oder der Position des endlosen Förderelements erhält man eine zuverlässige Information über den jeweiligen Durchmesser des hergestellten Ballens.

Indem man mehrere - insbesondere mindestens drei - Sensoren über die Breite der Rundballenpresse verteilt bzw. einen Sensor sukzessive über die Breite der Rundballenpresse hin und her bewegt bzw. die Breite der Rundballenpresse mittels eines Sensors abtastet, erhält man eine Information über die Verteilung des Durchmessers über die Breite des Ballens. Diese Information wird dem Bediener der Ballenpresse durch eine geeignete Anzeigeeinrichtung dargestellt, so dass er gegebenenfalls die Symmetrie des Ballens durch Gegenlenken verbessern kann. Diese Information kann auch einer selbsttätigen Lenkeinrichtung des Traktors der Ballenpresse zugeführt werden.

Weiterhin kann durch eine Rechnereinrichtung anhand der vorliegenden Informationen ein mittlerer Ballendurchmesser und/oder eine Konzentrizität oder Ballenform bestimmt werden. Insbesondere kann ermittelt werden, ob der Ballen konvex (tonnenförmig) oder konkav (kissenförmig) ist. Anhand dessen kann dem Bediener oder einer selbsttätigen Lenkeinrichtung angezeigt werden, dass er oder sie die Mitte der Ballenpresskammer durch geeignete Fahrweise in niedrigerem oder höherem Maße mit Erntegut beaufschlagen möge, um möglichst zylindrische Ballen zu erhalten.

Eine besonders hohe Auflösung der Messwerte erhält man, falls jedem Förderelement des Ballenpressraums ein eigener Sensor zugeordnet wird.

Für den berührungslos arbeitenden Sensor kommen verschiedene Ausführungsformen in Frage. In einer bevorzugten Ausführungsform wird ein Ultraschallentfernungsmesser eingesetzt. Denkbar wäre auch die Verwendung eines Radar-, Mikrowellen- oder Laser-Entfernungsmessers.

In den Zeichnungen ist ein nachfolgend näher beschriebenes Ausführungsbeispiel der Erfindung dargestellt. Es zeigt:
- Fig. 1: eine erfindungsgemäße Rundballenpresse in Seitenansicht und in schematischer Darstellung, und
- Fig. 2: eine schematische Ansicht der Vorrichtung zur Messung des Durchmessers und der Form des Rundballens, die Sensoren, eine Rechnereinrichtung und eine Anzeigeeinrichtung umfasst.

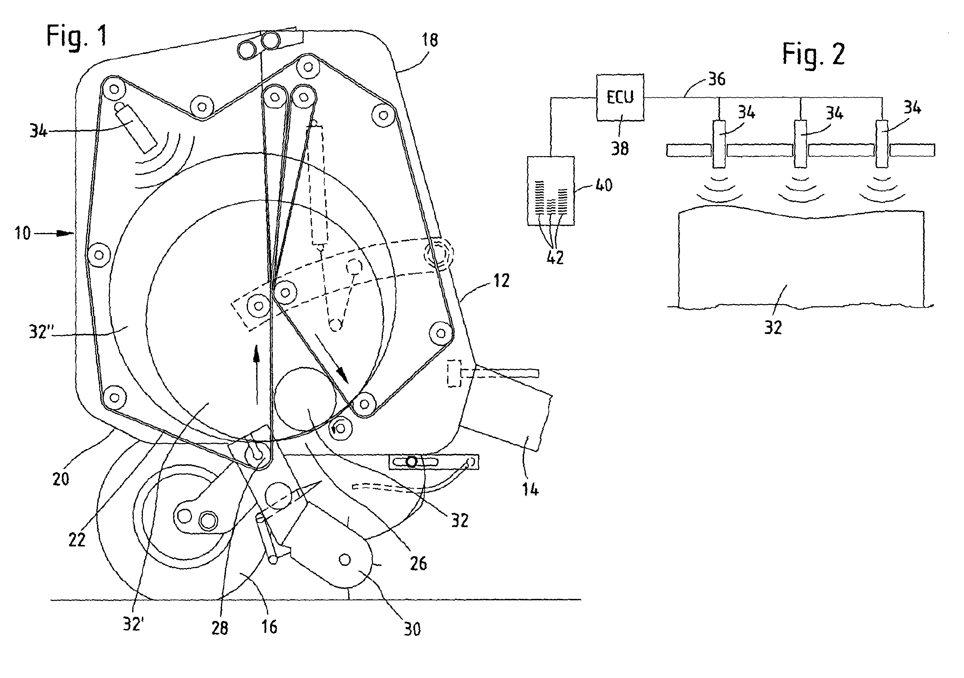

Die Figur 1 zeigt eine Rundballenpresse 10 mit einem Gehäuse 12, das mittels einer Deichsel 14 an einen nicht dargestellten Ackerschlepper angehängt werden kann, um bezüglich der Figur 1 nach rechts in einer Fahrtrichtung über ein Feld gezogen zu werden, und sich auf Rädern 16 abstützt. Das Gehäuse 12 setzt sich aus einer vorderen, starren Gehäusehälfte 18 und einer rückwärtigen, schwenkbaren Gehäusehälfte 20 zusammen, die in einem oben liegenden Gelenk schwenkbar miteinander verbunden sind. Das Gehäuse 12 trägt eine Vielzahl von Walzen. Über die Walzen verlaufen mehrere nebeneinander angeordnete endlose Förderelemente 22, die zusammen mit Seitenwänden des Gehäuses 12 einen Ballenpressraum größtenteils umgeben. In diesem Ausführungsbeispiel sind die Förderelemente 28 als Riemen ausgebildet. In dem unteren Bereich des Ballenpressraums ist ein Einlass 26 vorgesehen, der rückwärtig von einer Walze 28 begrenzt wird und von einer Pick-Up 30 aufgenommenes Gut in den Ballenpreßraum eintreten läßt.

Die Rundballenpresse 10 umfasst mehrere seitlich nebeneinander angeordnete Förderelemente 22. Sie werden beim Erntebetrieb in Bewegung versetzt und umschließen einen sich im Ballenpressraum bildenden Ballen 32 nach vorn, oben und hinten. Der Aufbau und die Funktion einer derartigen Rundballenpresse sind an sich bekannt, siehe z.B. das Dokument. Mit den Bezugszeichen 32, 32' und 32" sind Ballen anwachsenden Durchmessers gekennzeichnet.

Am rückwärtigen, oberen Ende der rückwärtigen, schwenkbaren Gehäusehälfte 20 sind mehrere Sensoren 34 befestigt. Wie anhand der Figur 2 erkennbar ist, sind drei Sensoren 34 in Fahrtrichtung der Ballenpresse 10 seitlich nebeneinander angeordnet. Die äußeren Sensoren 34 wirken mit den Randbereichen des Ballens 32 zusammen, während der mittlere Sensor 34 mit der Mitte des Ballens 32 zusammenwirkt. Die Sensoren 34 sind Ultraschallentfernungsmesser, die insbesondere auf einer Laufzeitmessung beruhen. Die Sensoren 34 erfassen den Abstand zwischen ihrer Unterseite und den benachbarten Fördermitteln 28, die unmittelbar am äußeren Umfang des Ballen 32 anliegen. Die Sensoren 34 stellen auf diese Weise Information über den Durchmesser des Ballens 32 in Abhängigkeit von der Position des Sensors 34 bereit.

Über eine Busleitung 36 sind die Sensoren 34 mit einer Rechnereinrichtung 38 verbunden, die wiederum eine in der Fahrerkabine des Ackerschleppers angeordnete Anzeigeeinrichtung 40 ansteuert. Die Sensoren 34, die Rechnereinrichtung 38 und die Anzeigeeinrichtung 40 werden vom Bordnetz des Ackerschleppers mit Strom versorgt. Die Anzeigeeinrichtung 40 und die Rechnereinrichtung 38 sind vorzugsweise Bestandteile eines Busnetzsystems des Ackerschleppers. Auf der Anzeigeeinrichtung 40 werden die drei Messwerte der Sensoren 34 in drei Feldern 42 angezeigt, die jeweils einen Bereich des Ballens 32 repräsentieren. Der Bediener wird somit über den aktuellen Durchmesser und die Form des entstehenden Ballens 32 informiert.

Die Messwerte der Sensoren 34 und/oder daraus abgeleitete Werte, wie ein mittlerer Ballendurchmesser oder die positionsabhängige Änderung des mittleren Durchmessers können zur späteren Auswertung von der Rechnereinrichtung 38 georeferenziert kartiert werden.

## Patentansprüche

1. Rundballenpresse (10) mit einer Ballenbildungskammer variabler Größe und einer Vorrichtung zur Messung des Durchmessers und der Form eines Rundballens (32), mit wenigstens einem Sensor (34), der eingerichtet ist, eine Information hinsichtlich des Durchmessers eines in der Ballenbildungskammer (24) gebildeten Ballens (32) zu erzeugen, **dadurch gekennzeichnet, dass** der Sensor (34) eingerichtet ist, die Position der äußeren Oberfläche des Ballens (32) und/oder eines die Ballenbildungskammer begrenzenden endlosen Förderelements (28) berührungslos zu erfassen.

2. Rundballenpresse (10) nach Anspruch 1, **dadurch gekennzeichnet, dass** mindestens drei Sensoren (34) über die Breite der Ballenbildungskammer verteilt sind.

3. Rundballenpresse (10) nach Anspruch 1 oder 2, **dadurch gekennzeichnet, dass** der Sensor (34) mit einer Rechnereinrichtung (38) verbunden ist, die betreibbar ist, einen mittleren Durchmesser des Ballens (32) und/oder eine Form des Ballens (32) zu bestimmen, insbesondere ob der Ballen konvex oder konkav ist.

4. Rundballenpresse (10) nach einem der Ansprüche 1 bis 3, **dadurch gekennzeichnet, dass** jedem Förderelement (28) der Ballenbildungskammer ein Sensor (34) zugeordnet ist.

5. Rundballenpresse (10) nach einem der Ansprüche 1 bis 4, **dadurch gekennzeichnet, dass** der Sensor (34) mit Ultraschall arbeitet.

## Claims

1. Rotobaler (10) with a baling chamber of variable size and an arrangement for the measurement of the diameter and the shape of a cylindrical bale (32), with at least one sensor (34) that is arranged to generate information regarding the diameter of a bale (32) being formed in the baling chamber (24), **characterized in that** the sensor (34) is arranged to detect on a noncontacting basis the position of the outer surface of the bale (32) and/or of an endless conveying element (22) bordering the baling chamber.

2. Rotobaler (10) according to Claim 1, **characterized in that** at least three sensors (34) are distributed over the width of the baling chamber.

3. Rotobaler (10) according to Claim 1 or 2, **characterized in that** the sensor (34) is connected to a computer system (38) that can be operated so as to determine an average diameter of the bale (32) and/or a shape of the bale (32), particularly whether the bale is convex or concave.

4. Rotobaler (10) according to one of the Claims 1 to 3, **characterized in that** a sensor (34) is associated with each conveying element (22) of the baling chamber.

5. Rotobaler (10) according to one of the Claims 1 to 4, **characterized in that** the sensor (34) operates on an ultrasonic basis.

## Revendications

1. Presse à balles cylindriques (10) comportant une chambre de formage de la balle à dimension variable et un dispositif destiné à mesurer le diamètre et la forme d'une balle cylindrique (32), comportant au moins un capteur (34) qui est configuré pour générer une information relative au diamètre d'une balle (32) formée dans la chambre de formage de la balle, **caractérisée en ce que** le capteur (34) est configuré pour détecter sans contact la position de la surface extérieure de la balle (32) et/ou d'un élément de transport (28) continu délimitant la chambre de formage de la balle.

2. Presse à balles cylindriques (10) selon la revendication 1, **caractérisée en ce qu'**au moins trois capteurs (34) sont répartis sur la largeur de la chambre de formage de la balle.

3. Presse à balles cylindriques (10) selon la revendication 1 ou 2, **caractérisée en ce que** le capteur (34) est relié à une unité de calcul (38), qui peut être utilisée pour déterminer un diamètre moyen de la balle (32) et/ou une forme de la balle (32), en particulier pour déterminer si la balle est convexe ou concave.

4. Presse à balles cylindriques (10) selon l'une quelconque des revendications 1 à 3, **caractérisée en ce qu'**un capteur (34) est associé à chaque élément de transport (28) de la chambre de formage de la balle.

5. Presse à balles cylindriques (10) selon l'une quelconque des revendications 1 à 4, **caractérisée en ce que** le capteur (34) travaille par ultrasons.
